# EUROPÄISCHE PATENTSCHRIFT

(11) **EP 0 442 254 B1**
(45) Veröffentlichungstag und Bekanntmachung des Hinweises auf die Patenterteilung: **05.05.1993**
(21) Anmeldenummer: 90890343.8
(22) Anmeldetag: 20.12.1990
(51) Int. Cl.: C02F 1/78

(54) **Verfahren und Vorrichtung zur Herstellung von ozonhältigen Gasen und Lösungen**
Process and arrangement for the production of ozonic gases and solutions
Procédé et dispositif pour la production de gaz et de solutions ozonés

(30) Priorität: 14.02.1990 AT 342/90
(43) Veröffentlichungstag der Anmeldung: 21.08.1991
(73) Patentinhaber: SCHMIDDING-WERKE Wilhelm Schmidding GmbH & Co., 50735 Köln (DE)
(72) Erfinder: Schwarzl, Karl, Dr., A-4801 Mitterndorf (AT)
(74) Vertreter: Wolfram, Gustav, Dipl.-Ing.

(56) Entgegenhaltungen:
- EP-A- 0 047 925
- DE-A- 2 949 702
- US-A- 3 931 012

## Beschreibung

Die Erfindung betrifft ein Verfahren zur Herstellung einer ozonhältigen wässerigen Lösung, gegebenenfalls neben der Gewinnung eines Gases mit erhöhtem Ozongehalt, wobei eine wässerige Lösung in einem Absorptionsgefäß mit einem ozonhältigen Gas unter Druck behandelt wird, welches ozonhältige Gas in einem Ozongenerator durch stille elektrische Entladung in Luft oder Sauerstoff erzeugt und auf einen Druck bis zu 10 bar verdichtet wurde.

Es ist bekannt, daß Ozon ein ausgezeichnetes Bleich- und Desinfektionsmittel darstellt, wobei für die technische Anwendung das Ozon bevorzugt in einer relativ hohen Konzentration in einem Gasgemisch oder in einer wässerigen Lösung vorliegen sollte. Derartige Ozonlösungen werden beispielsweise vermehrt in der Zellstoffbleiche, bei der Trinkwasseraufbereitung und in der chemischen Industrie für Oxidationszwecke gebraucht.

Die großtechnische Herstellung höherkonzentrierter ozonhältiger Lösungen und Gase ist aber heute noch nicht befriedigend gelöst. Das gilt vor allem für die Herstellung wässeriger Lösungen mit einem Ozongehalt von über 200 g O₃/m³ Wasser und von Gasen mit über 160 g O₃/Nm³ Gas.

Bei der Herstellung von Ozon durch stille elektrische Entladung in Luft steigt der Energieverbrauch stark an, wenn eine hohe Ozonkonzentration erreicht werden soll. Aus Kostengründen ist man daher heute bestrebt, den Ozongenerator im energiesparenden Bereich zu betreiben, was aber andererseits einen erhöhten Einsatz von Sauerstoff erfordert und wiederum zu einer Kostensteigerung führt. Dem versucht man entgegenzusteuern, indem überschüssiger, nicht umgesetzter Sauerstoff in den Ozongenerator zurückgeführt wird. Dazu muß der Sauerstoff aber trocken und von Verunreinigungen befreit sein. Diese Reinigung kann aber dann Schwierigkeiten bereiten, wenn im Sauerstoff Verunreinigungen enthalten sind, die von der Reaktion des Ozons mit dem zu behandelnden Medium stammen. Aus diesem Grund wird nach Verfahren gesucht, die eine Aufkonzentrierung von Ozon im Gas bewirken sollen, da in diesem Fall der Sauerstoff rückgeführt werden kann, bevor er verunreinigt wird.

Nach einem bekannten Verfahren arbeitet man mit Adsorptionsmassen, die in der Lage sind, Ozon zu binden und es später in hoher Konzentration abzugeben. Der von Ozon befreite Sauerstoff kann wiederverwendet werden. Nach einem anderen Verfahren wird Ozon aus Sauerstoff adsorbiert und dann in eine Stickstoffatmosphäre desorbiert. Keines dieser Verfahren hat sich bis heute im großtechnischen Maßstab durchsetzen können, sodaß die Probleme - hoher Sauerstoffverbrauch oder hoher Energieverbrauch beim Ozonisator - nach wie vor ungelöst sind.

Ein Verfahren der eingangs erwähnten Art ist in der österreichischen Patentanmeldung A 2927/89 beschrieben. Gemäß diesem Verfahren wird das im Ozongenerator erzeugte ozonhältige Gas verdichtet, unter Druck in ein wässeriges Medium gelöst und diese Ozonlösung zum Bleichen von cellulosehältigen Materialien verwendet. Nicht umgesetztes Gas kann zum Ozonisator rückgeführt werden. Zur Erreichung hoher Ozon-Konzentrationen (Starkwasser) ist es allerdings erforderlich, bei Temperaturen unter der Raumtemperatur zu arbeiten. Weiters sollte das im Ozonisator erzeugte Rohgas einen Ozongehalt von über 100 g O₃/Nm³ aufweisen, was den Energieverbrauch des Ozongenerators entsprechend erhöht.

Die Erfindung setzt sich zum Ziel, dieses Verfahren weiter zu verbessern, um insbesondere auf wirtschaftliche Weise auf großtechnischem Weg zu Ozonlösungen und ozonhältigen Gasen mit hohem Ozongehalt zu gelangen. Der Ozonisator sollte dabei im energiesparenden Bereich betrieben werden, d.h. daß von einem Rohgas mit weniger als 100 g O₃/Nm³ ausgegangen werden sollte.

Dieses Ziel wird erfindungsgemäß dadurch erreicht, daß bei einem Verfahren der eingangs erwähnten Art in das ozonhältige Gas vor dessen Verdichtung eine unter Druck stehende ozonhältige wässerige Lösung entspannt wird, wobei Ozon an das ozonhältige Gas abgegeben und ein Gas mit erhöhtem Ozongehalt (Starkgas) gebildet wird. Auf diese Weise gelingt es, von einem Rohgas mit einem Ozongehalt von unter 100 g O₃/Nm³ auszugehen und trotzdem zu einem Starkgas von über 100 g O₃/Nm³ zu gelangen. Das erfindungsgemäße Verfahren gestattet die Herstellung von Starkwasser mit einem Ozongehalt von mehr als 200 g O₃/m³ bei Raumtemperatur.

Die unter Druck stehende, ozonhältige wässerige Lösung, die zur Einbringung von Ozon in das Schwachgas verwendet wird, wird bevorzugt dem Absorptionsgefäß entnommen und nach der Entspannung wieder in das Absorptionsgefäß zurückgeleitet.

Es hat sich gezeigt, daß auf diese Weise ein Starkgas mit einem Ozongehalt von über 160 g O₃/Nm³ Gas erhalten werden kann, wobei sich ein bevorzugter Bereich von 160 bis 180 g O₃/Nm³ Gas erstreckt.

Eine weitere bevorzugte Ausführungsform des erfindungsgemäßen Verfahrens besteht darin, daß das Starkgas zum Teil in das Absorptionsgefäß eingebracht und zum anderen Teil dem Produktionszyklus entzogen und den unmittelbaren Anwendungen z.B. für Bleichzwecke zugeführt wird.

Das erfindungsgemäße Verfahren kann auch zweistufig durchgeführt werden, wobei das aus dem Ozongenerator erhaltene Gas in zwei Teilströme geteilt wird und zur Absorption des Ozons der erste Teilstrom wie oben beschrieben nach Anreicherung und Verdichten einem ersten Absorptionsgefäß und der zweite Teilstrom nach Verdichten einem zweiten Absorptionsgefäß zugeführt wird und im ersten Absorptionsgefäß ein höherer Druck aufrecht erhalten wird als im zweiten Absorptionsgefäß.

Es ist zweckmäßig, die im zweiten Absorptionsgefäß entstehende wässerige Lösung abzuziehen und in den ersten Teilstrom zu entspannen und die gewünschte ozonhältige wässerige Lösung dem ersten Absorptionsgefäß zu entnehmen. Diese zweistufige Ausführungsform erlaubt höhere Stoffumsätze als die einstufige Variante.

Das erfindungsgemäße Verfahren kann aber auch dreistufig geführt werden, wobei das aus dem Ozongenerator erhaltene Gas in drei Teilströme geteilt und ein erster Teilstrom nach Verdichtung in ein erstes Absorptionsgefäß geführt wird, die erhaltene wässerige Lösung in den zweiten Teilstrom entspannt wird, wodurch der zweite Teilstrom mit Ozon angereichert wird, der dann einem weiteren Absorptionsgefäß zugeführt wird. Aus diesem Absorptionsgefäß wird ebenfalls die entstehende wässerige Lösung abgezogen und in den dritten Teilstrom entspannt, welcher dadurch ebenfalls mit Ozon angereichert wird. Danach wird dieser dritte angereicherte Teilstrom zumindest teilweise in ein drittes Absorptionsgefäß geführt und dort in Wasser oder einer wässerigen Lösung zum gewünschten Ozongehalt gelöst, worauf die gewünschte ozonhältige Lösung aus dem dritten Absorptionsgefäß abgezogen und der Verwendung zugeführt werden kann.

Der mit Ozon angereicherte dritte Teilstrom kann aber auch direkt z.B. für Bleichzwecke verwendet werden.

Die Erfindung betrifft auch eine Vorrichtung zur Durchführung des Verfahrens mit einem Ozongenerator, mindestens einem Absorptionsgefäß, das insbesondere als Absorptionskolonne ausgebildet ist und mit dem Ozongenerator leitungsmäßig verbunden ist und einem Trockner, Pumpen und Leitungen zur Verbindung der Anlagenteile, welche Anlage dadurch gekennzeichnet ist, daß in der leitungsmäßigen Verbindung zwischen dem Ozongenerator und dem Absorptionsgefäß mindestens ein Entspannungsgefäß vorgesehen ist, welches über eine Leitung aus dem Absorptionsgefäß mit ozonhältigem Wasser gespeist wird und über eine Rückleitung mit dem Kopf des Absorptionsgefäßes verbunden ist.

Bei einer bevorzugten Ausführungsform der erfindungsgemäßen Vorrichtung ist der Kopf des Absorptionsgefäßes zur Rückführung von Sauerstoff über eine Sauerstoffleitung und einen Trockner an den Ozongenerator angeschlossen.

Für die zweistufige Führung des erfindungsgemäßen Verfahrens ist die Vorrichtung so gestaltet, daß von der Ozonleitung eine Zweigleitung zu einer zweiten Absorptionskolonne führt, welche über eine Leitung mit dem Entspannungsgefäß und über eine Gasleitung mit der ersten Absorptionskolonne verbunden ist, und daß vom Entspannungsgefäß sowohl eine Rückleitung zum Kopf der zweiten Absorptionskolonne als auch eine Ozonleitung zur ersten Absorptionskolonne vorgesehen ist.

Für die dreistufige Führung des erfindungsgemäßen Verfahrens ist die Vorrichtung so ausgelegt, daß der Ozongenerator mit drei Absorptionsgefäßen leitungsmäßig verbunden ist, wobei in der Leitung zwischen Ozongenerator und erster Absorptionskolonne und in der Leitung zwischen Ozongenerator und zweiter Absorptionskolonne je ein Entspannungsgefäß vorgesehen ist.

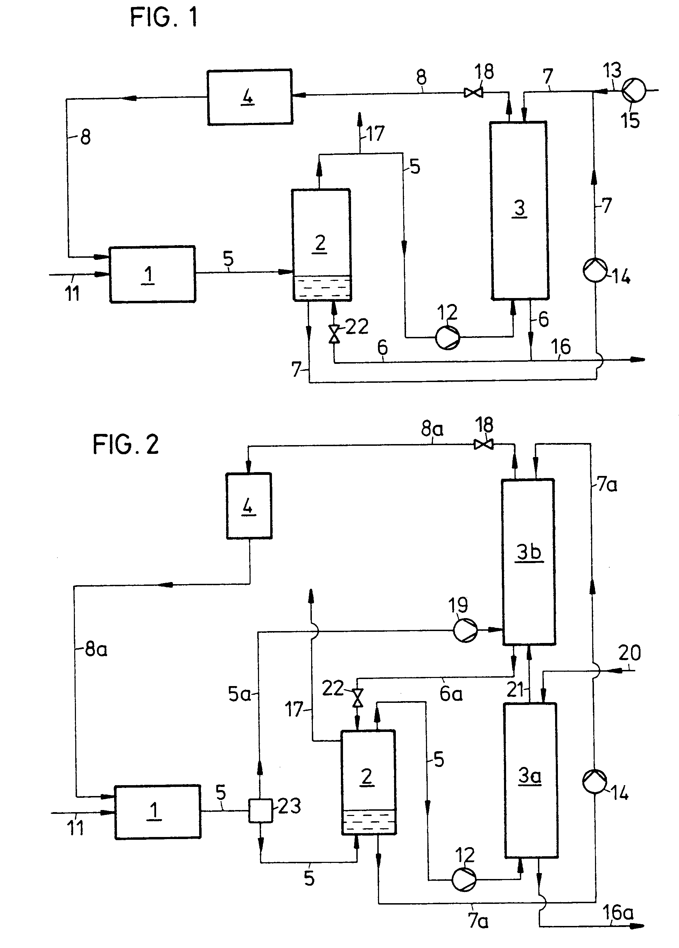

Nachstehend wird die Erfindung anhand der Zeichnung näher beschrieben, welche in den Figuren 1, 2 und 3 drei Ausführungsformen zeigt.

In Fig. 1 ist mit 1 ein Ozongenerator, mit 2 ein Entspannungsgefäß und mit 3 eine Absorptionskolonne bezeichnet. Der Ozongenerator 1 wird mit Luft oder Sauerstoff gespeist (11) und gibt Schwachgas mit einem Ozongehalt zwischen 20 und 100 g O₃/Nm³ Gas über die Ozonleitung 5 der Absorptionskolonne 3 ab. In die Ozonleitung 5 ist das Entspannungsgefäß 2 geschaltet, in das Starkwasser, das aus der Absorptionskolonne 3 stammt und unter einem Druck zwischen 2 und 10 bar steht, entspannt wird. Die Entspannung wird durch das Ventil 22 besorgt. Durch die Entspannung gibt das Starkwasser einen Teil seines gelösten Ozons an das Schwachgas ab, sodaß ein höher konzentriertes ozonhältiges Gas mit einem Ozongehalt zwischen 100 und 180 g O₃/Nm³ Gas erhalten wird, das von einem Verdichter 12 in der Ozonleitung 5 auf einen Druck zwischen 2 und 10 bar verdichtet und in diesem Zustand der Absorptionskolonne 3 aufgegeben wird. Diese Kolonne 3 wird an ihrem Kopf mit ozonhältigem Rückwasser aus dem Entspannungsgefäß 2 gespeist (7), wobei der Rückleitung 7 nach Bedarf Frischwasser zugeführt werden kann (13). Es versteht sich von selbst, daß in der Rückleitung 7 eine Pumpeinrichtung 14 und eine entsprechende Vorrichtung 15 zur Einspeisung von Wasser bei erhöhtem Druck vorgesehen sein müssen.

In der Absorptionskolonne 3 wird unter Druck (2 bis 10, vorzugsweise 6 bis 8 bar) Ozon aus dem Gas in das Wasser gelöst, wobei Starkwasser mit einem Ozongehalt von mindestens 200 g O₃/m³ entsteht, das zum Teil - wie oben bereits beschrieben - in das Entspannungsgefäß 2 zur Abgabe von Ozon zurückgeleitet wird, oder als erfindungsgemäß hergestelltes Starkwasser für seine bestimmungsgemäße Verwendung vor der Entspannung aus der Leitung 6 abgezogen werden kann (16).

Starkgas mit einem Ozongehalt von 160 bis 180 g O₃/Nm³ Gas kann der Ozonleitung 5 nach Anlaufen des erfindungsgemäßen Verfahrens entnommen werden (17).

Wird Sauerstoff zur Erzeugung von Ozon verwendet, so wird der nicht umgesetzte Sauerstoff zweckmäßigerweise am Kopf der Absorptionskolonne 3 durch die Sauerstoffleitung 8 abgezogen, im Trockner 4 getrocknet und wieder dem Ozongenerator 1 zugeführt. Ein Druckabfall in der Absorptionskolonne 3 wird durch das Ventil 18 verhindert.

In Fig. 2 ist eine zweistufige Ausführungsform des erfindungsgemäßen Verfahrens dargestellt, wobei die Anreicherung mit Ozon in zwei Absorptionskolonnen erfolgt. Zunächst wird Schwachgas aus dem Ozongenerator 1 wie in Fig. 1 beschrieben über das Entspannungsgefäß 2 in die Absorptionskolonne 3a verbracht. Zum Unterschied von der in Fig. 1 dargestellten Ausführungsform wird ozonhältiges Wasser aber nicht aus der Absorptionskolonne 3a in das Entspannungsgefäß 2 geleitet, sondern aus einer weiteren Absorptionskolonne 3b, u.zw. über die Leitung 6a. Dieses ozonhältige Wasser wird ebenfalls mit Schwachgas aus dem Ozongenerator 1 erzeugt, das der Ozonleitung 5 entnommen (5a) und in verdichtetem Zustand (19) unter einem Druck zwischen 2 und 9 bar in die Absorptionskolonne 3b geleitet wird. Eine entsprechende Einrichtung zur Abzweigung von Schwachgas aus der Ozonleitung 5 ist mit 23 bezeichnt. Es hat sich als vorteilhaft erwiesen, rund zwei Drittel des Schwachgases in die Absorptionskolonne 3b abzuzweigen. Die Absorptionskolonne 3b wird mit Rückwasser aus dem Entspannungsgefäß 2 gespeist (7a), wobei in der Rückwasserleitung 7a Vorrichtungen zum Pumpen und zur Erhöhung des Druckes vorgesehen sind (in der Fig. nicht dargestellt).

Im Entspannungsgefäß 2 wird auf analoge Weise wie in Fig. 1 beschrieben Starkgas gebildet, das unter einem Druck zwischen 2 und 10 bar in die Absorptionskolonne 3a geleitet wird. Es kann aber auch aus dem Produktionszyklus durch Abziehen (17) dem Entspannungsgefäß 2 entzogen werden. Das erfindungsgemäß hergestellte Starkwasser mit einem Ozongehalt von mindestens 200 g O₃/m³ kann aus der Absorptionskolonne 3a abgezogen werden (16a). Frischwasser wird am Kopf der Absorptionskolonne 3a in den Produktionszyklus eingebracht (20).

Nicht umgesetzter Sauerstoff und Rest-Ozon wird aus der Kolonne 3a in den Sumpf der Kolonne 3b eingeleitet, wobei es von entscheidender Bedeutung ist, daß der Druck in der Kolonne 3a höher eingestellt wird als in der Kolonne 3b.

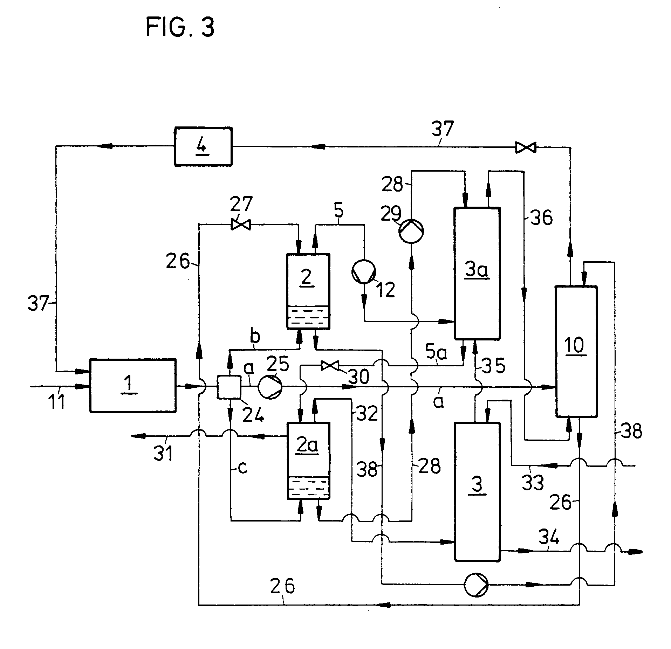

In Fig. 3 ist die dreistufige Ausführungsform des erfindungsgemäßen Verfahrens dargestellt. Schwachgas aus dem Ozongenerator 1 wird zunächst in drei Teilströme mittels einer geeigneten Einrichtung 24 geteilt. Die Bezugszeichen a, b und c beziehen sich sowohl auf die Teilströme als auch auf die zugehörigen Gasleitungen, in denen die Teilströme zu den weiteren Anlagenteilen transportiert werden. Der Teilstrom a wird zunächst verdichtet (25) und in der Absorptionskolonne 10 mit Rückwasser aus dem Entspannungsgefäß 2, das in der Leitung 38 dem Absorptionsgefäß 10 zugeführt wird, unter Druck behandelt, wobei eine erste ozonhältige Lösung entsteht, die aus dem Sumpf der Absorptionskolonne 10 abgezogen und dem Entspannungsgefäß 2 zugeführt (26) wird. Die Entspannung wird vom Ventil 27 besorgt. Entspannt wird in den Teilstrom b, der dadurch mit Ozon angereichert wird. Der angereicherte Teilstrom wird in die Kolonne 3a geleitet (5) und mit Rückwasser aus dem Entspannungsgefäß 2a behandelt. Kolonne 3a und Entspannungsgefäß 2a sind über die Rückwasserleitung 28 und die Pumpe 29, die das Rückwasser auf einen entsprechenden Druck bringt, miteinander verbunden.

Die in der Kolonne 3a erzeugte ozonhältige Lösung wird über Leitung 5a abgezogen und über das Ventil 30 in das Entspannungsgefäß 2a entspannt, wobei Ozon in den dritten Teilstrom c abgegeben und Starkgas mit einem hohen Ozongehalt gebildet wird. Soll dieses Starkgas als solches sofort verwendet werden, so kann es über die Abzugsleitung 31 dem Entspannungsgefäß 2a entnommen werden. Zur Herstellung wässeriger Lösungen mit hohem Ozongehalt wird es in die Kolonne 3 geleitet (32), wo das Ozon größtenteils in Wasser oder eine wässerige Lösung, die am Kopf der Kolonne 3 unter Druck eingespeist wird (33), gelöst wird. Das gebildete Starkwasser kann über die Starkwasserleitung 34 dem Produktionszyklus entnommen werden.

Die Kolonnen 3 und 3a sind über eine Sauerstoffleitung 35 miteinander verbunden, um nicht umgesetzten Sauerstoff von der Kolonne 3 in die Kolonne 3a, von dort über Leitung 36 in die Kolonne 10 und weiter über die Leitung 37 und den Trockner 4 in den Ozongenerator 1 rückzuleiten. Für den Fachmann ist selbstverständlich, daß diese Sauerstoffrückführung eine entsprechende Einstellung der Druckverhältnisse in den Kolonnen 3, 3a und 10 voraussetzt.

Zur Verbringung von Rückwasser nach den Entspannungsstufen von den Entspannungsgefäßen 2a und 2 in die Kolonnen 3a und 10 sind entsprechende Leitungen 28 und 38 vorgesehen.

Im nachstehenden Ausführungsbeispiel wird die einstufige Variante des erfindungsgemäßen Verfahrens noch näher beschrieben.

### Beispiel:

Ein Rohgas eines Ozongenerators mit 90 g O₃/Nm³ wird einem Entspannungsgefäß zugeführt (116,7 Nm³ Gas/h; 10,5 kg O₃/h). Im Entspannungsgefäß wird ein leichter Überdruck von 0,5 bar eingestellt.

In das Entspannungsgefäß wird gleichzeitig Starkwasser entspannt, das von der Absorptionskolonne stammt (siehe weiter unten) und unter einem Druck von 7 bar steht. Aufgrund der Entspannung wird ein Teil des in der Absorptionskolonne unter Druck gelösten Ozons wieder frei, wodurch das Rohgas aus dem Ozongenerator mit Ozon angereichert wird. Das angereicherte Rohgas wird mittels einer Wasserringpumpe auf einen Druck von 7 bar komprimiert und der Absorptionskolonne zugeführt.

In den Kopf der Absorptionskolonne wird Wasser zur Absorption des Ozon eingebracht (44 m³/h, 25 °C). Durch die Regulierung des Kreislaufwassers wird das Gasgemisch im Entspannungsgefäß auf eine Ozonkonzentration von etwa 160 g O₃/Nm³ Gas gebracht. Das Kreislaufwasser wird auf einer Temperatur von 25 °C gehalten.

Das aus der Kolonne entnehmbare Starkwasser hat einen Ozongehalt von mindestens 210 g O₃/m³ und wird zum Teil - wie oben beschrieben - in das Entspannungsgefäß entspannt und zum anderen Teil dem Produktionszyklus entnommen.

Der überschüssige Sauerstoff, der mit Wasserdampf gesättigt und mit einer geringen Menge Ozon der Absorptionskolonne entnommen werden kann, wird getrocknet und zum Ozongenerator zurückgeführt.

## Patentansprüche

1. Verfahren zur Herstellung einer ozonhältigen, wässerigen Lösung, gegebenenfalls neben der Gewinnung eines Gases mit erhöhtem Ozongehalt, wobei eine wässerige Lösung in einem Absorptionsgefäß mit einem ozonhältigen Gas unter Druck behandelt wird, welches ozonhältige Gas in einem Ozongenerator durch stille elektrische Entladung in Luft oder Sauerstoff erzeugt und auf einen Druck bis zu 10 bar verdichtet wurde, dadurch gekennzeichnet, daß in das ozonhältige Gas vor dessen Verdichtung eine unter Druck stehende, ozonhältige wässerige Lösung entspannt wird, wobei Ozon an das ozonhältige Gas abgegeben und ein Gas mit erhöhtem Ozongehalt (Starkgas) gebildet wird.

2. Verfahren nach Anspruch 1, dadurch gekennzeichnet, daß die unter Druck stehende, ozonhältige wässerige Lösung dem Absorptionsgefäß (3) entnommen und nach der Entspannung wieder in das Absorptionsgefäß (3)zurückgeleitet wird.

3. Verfahren nach einem der Ansprüche 1 oder 2, dadurch gekennzeichnet, daß das Starkgas nur zum Teil in das Absorptionsgefäß (3) eingebracht wird.

4. Verfahren nach Anspruch 1, dadurch gekennzeichnet, daß das Verfahren zweistufig durchgeführt wird, wobei das aus dem Ozongenerator erhaltene Gas in zwei Teilströme geteilt wird und zur Absorption des Ozons der erste Teilstrom in ein erstes Absorptionsgefäß (3a) und der zweite Teilstrom nach Verdichten in ein zweites Absorptionsgefäß (3b) geführt wird und im ersten Absorptionsgefäß (3a) ein höherer Druck aufrecht erhalten wird, als im zweiten Absorptionsgefäß (3b).

5. Verfahren nach Anspruch 4, dadurch gekennzeichnet, daß die im zweiten Absorptionsgefäß (3b) entstehende wässerige Lösung in den ersten Teilstrom (a) entspannt wird und daß die gewünschte ozonhältige, wässerige Lösung dem ersten Absorptionsgefäß (3a) entnommen wird.

6. Verfahren nach Anspruch 1, dadurch gekennzeichnet, daß es dreistufig durchgeführt wird, wobei das aus dem Ozongenerator erhaltene Gas in drei Teilströme (a, b, c) geteilt wird und der Teilstrom (a) nach Verdichtung in ein erstes Absorptionsgefäß (10) geführt, die erhaltene wässerige Lösung in den zweiten Teilstrom (b) entspannt, wonach der mit Ozon angereicherte Teilstrom (b) einem weiteren Absorptionsgefäß (3a) zugeführt, wässerige Lösung aus diesem Absorptionsgefäß (3a) abgezogen und in den Teilstrom (c) entspannt wird, welcher Teilstrom (c) dadurch ebenfalls mit Ozon angereichert wird, wonach dieser angereicherte Teilstrom zumindest teilweise in das Absorptionsgefäß (3) geführt und von diesem die gewünschte wässerige, ozonhältige Lösung abgenommen wird.

7. Vorrichtung zur Durchführung des Verfahrens nach einem oder mehreren der Ansprüche 1 bis 6, mit einem Ozongenerator (1), mindestens einem Absorptionsgefäß (3, 3a, 3b), das insbesondere als Absorptionskolonne ausgebildet ist und mit dem Ozongenerator (1) leitungsmäßig (5) verbunden ist und einem Trockner (4), Pumpen und Leitungen zur Verbindung der Anlagenteile, dadurch gekennzeichnet, daß in der leitungsmäßigen Verbindung (5) zwischen dem Ozongenerator (1) und dem Absorptionsgefäß (3, 3a) mindestens ein Entspannungsgefäß (2, 2a) vorgesehen ist, welches über eine Leitung (6, 6a, 5a) aus dem Absorptionsgefäß (3, 3b, 3a) mit ozonhältigem Wasser gespeist wird und über eine Rückleitung (7, 7a, 28) mit dem Kopf des Absorptionsgefäßes (3, 3b, 3a) verbunden ist.

8. Vorrichtung nach Anspruch 7, dadurch gekennzeichnet, daß der Kopf des Absorptionsgefäßes (3, 3b, 10) zur Rückführung von Sauerstoff über eine Sauerstoffleitung (8,8a,37) und einen Trockner (4) an den Ozongenerator (1) angeschlossen ist.

9. Vorrichtung nach Anspruch 7 zur Durchführung des Verfahrens nach den Ansprüchen 4 oder 5, dadurch gekennzeichnet, daß von der Ozonleitung (5) eine Zweigleitung (5a) zu einer Absorptionskolonne (3b) führt, welche über die Leitung (6a) mit dem Entspannungsgefäß (2) und über die Gasleitung (21) mit der Absorptionskolonne (3a) verbunden ist, und daß vom Entspannungsgefäß (2) sowohl eine Rückleitung (7a) zum Kopf der Absorptionskolonne (3b), als auch eine Ozonleitung (5) zur Absorptionskolonne (3a) vorgesehen ist.

10. Vorrichtung nach Anspruch 7 zur Durchführung des Verfahrens nach Anspruch 6, dadurch gekennzeichnet, daß der Ozongenerator (1) mit drei Absorptionsgefäßen (3, 3a, 10) leitungsmäßig (c, 32; b, 5; a) verbunden ist, wobei in der Leitung (b, 5) zwischen Ozongenerator (1) und Absorptionskolonne (3a) und in der Leitung (c, 32) zwischen Ozongenerator (1) und Absorptionskolonne (3) je ein Entspannungsgefäß (2, 2a) vorgesehen ist.

## Claims

1. A process for preparing an ozonic aqueous solution, optionally in addition to recovering a gas having an elevated ozone content, wherein an aqueous solution is treated in an absorption vessel under pressure with an ozonic gas produced in an ozone generator by silent electrical discharge in air or oxygen and compressed to a pressure of up to 10 bar, characterized in that an aqueous ozonic solution under pressure is decompressed into the ozonic gas prior to compressing the ozonic gas, thus releasing ozone to the ozonic gas and forming a gas having an elevated ozone content (strong gas).

2. A process according to claim 1, characterized in that the pressurized aqueous ozonic solution is taken from the absorption vessel (3) and is recycled into the absorption vessel (3) upon decompression.

3. A process according to one of claims 1 or 2, characterized in that the strong gas is introduced into the absorption vessel (3) only partially.

4. A process according to claim 1, characterized in that the process is carried out in two stages, wherein the gas obtained from the ozone generator is divided into two partial streams and, for the absorption of the ozone, the first partial stream is fed into a first absorption vessel (3a) and the second partial stream, upon compression, is fed into a second absorption vessel (3b), a higher pressure being maintained in the first absorption vessel (3a) than in the second absorption vessel (3b).

5. A process according to claim 4, characterized in that the aqueous solution forming in the second absorption vessel (3b) is decompressed into the first partial stream (a) and that the desired aqueous ozonic solution is taken from the first absorption vessel (3a).

6. A process according to claim 1, characterized in that it is carried out in three stages, wherein the gas obtained from the ozone generator is divided into three partial streams (a, b, c) and the partial stream (a) is conducted into a first absorption vessel (10) upon compression, the aqueous solution obtained is decompressed into the second partial stream (b), whereupon the partial stream (b) enriched with ozone is fed to a further absorption vessel (3a), aqueous solution is withdrawn from this absorption vessel (3a) and is decompressed into the partial stream (c), thus enriching also the partial stream (c) with ozone, whereupon this enriched partial stream at least partially is conducted into the absorption vessel (3) and the desired aqueous ozonic solution is taken from this absorption vessel.

7. An arrangement for carrying out the process according to one or several of claims 1 to 6, comprising an ozone generator (1), at least one absorption vessel (3, 3a, 3b), in particular designed as an absorption column and flow-connected (5) with the ozone generator (1), and a drier (4), pumps and duct means for connecting the plant parts, characterized in that at least one pressure-releasing vessel (2, 2a) is provided in the flow-connection (5) between the ozone generator (1) and the absorption vessel (3, 3a), which pressure-releasing vessel is fed with ozone-containing water from the absorption vessel (3, 3b, 3a) via a duct (6, 6a, 5a) and is connected with the top of the absorption vessel (3, 3b, 3a) via a return duct (7, 7a, 28).

8. An arrangement according to claim 7, characterized in that the top of the absorption vessel (3, 3b, 10) is connected to the ozone generator (1) via an oxygen duct (8, 8a, 37) and a drier (4) for recycling oxygen.

9. An arrangement according to claim 7 for carrying out the process according to claim 4 or 5, characterized in that a branch duct (5a) leads from the ozone duct (5) to an absorption column (3b), which is connected with the pressure-releasing vessel (2) via a duct (6a) and with the absorption column (3a) via a gas duct (21), and that both a return duct (7a) leading to the top of the absorption column (3b) and an ozone duct (5) leading to the absorption column (3a) are provided from the pressure-releasing vessel (2).

10. An arrangement according to claim 7 for carrying out the process according to claim 6, characterized in that the ozone generator (1) is flow-connected (c, 32; b, 5; a) with three absorption vessels (3, 3a, 10), one pressure-releasing vessel (2, 2a) each being provided in the duct (b, 5) between the ozone generator (1) and the absorption column (3a) and in the duct (c, 32) between the ozone generator (1) and the absorption column (3).

## Revendications

1. Procédé de production d'une solution aqueuse ozonée, le cas échéant parallèlement à l'obtention d'un gaz ayant une teneur accrue en ozone, une solution aqueuse étant traitée sous pression par un gaz ozoné dans un récipient d'absorption, lequel gaz ozoné est produit dans un générateur d'ozone par décharge électrique silencieuse dans l'air ou l'oxygène et est comprimé à une pression maximale de 10 bars, caractérisé en ce qu'une solution aqueuse ozonée, sous pression, est détendue dans le gaz ozoné avant sa compression, de l'ozone étant cédé au gaz ozoné et un gaz à teneur accrue en ozone (gaz riche) étant formé.

2. Procédé selon la revendication 1, caractérisé en ce que la solution aqueuse ozonée sous pression est retirée du récipient d'absorption (3) et est ramenée après détente au récipient d'absorption (3).

3. Procédé selon une des revendications 1 ou 2, caractérisé en ce que suele une partie du gaz riche est introduite dans le récipient d'absorption (3).

4. Procédé selon la revendication 1, caractérisé en ce que le procédé est mis en oeuvre en deux temps, le gaz obtenu à la sortie du générateur d'ozone étant divisé en deux courants partiels à un premier courant partiel étant, en vue de l'absorption de l'ozone, acheminé à un premier récipient d'absorption (3a) et le second courant partiel étant acheminé après compression à un second récipient d'absorption (3b) et la pression maintenue dans le premier récipient d'absorption (3a) étant supérieure à celle du second récipient d'absorption (3b).

5. Procédé selon la revendication 4, caractérisé en ce que la solution aqueuse se formant dans le second récipient d'absorption (3b) est détendue dans le premier courant partiel (a) et que la solution aqueuse ozonée souhaitée est retirée du premier récipient d'absorption (3a).

6. Procédé selon la revendication 1, caractérisé en ce qu'il est mis en oeuvre en trois temps, le gaz obtenu à la sortie du générateur d'ozone étant divisé en trois courants partiel (a, b, c) et le courant (a) étant acheminé après compression à un premier récipient d'absorption (10), la solution aqueuse obtenue étant détendue dans le second courant partiel (b), le courant partiel (b) enrichi en ozone étant ensuite acheminé à un autre récipient d'absorption (3a), de la solution aqueuse étant soutirée de ce récipient d'absorption (3a) et détendue dans le courant partiel (c), lequel courant partiel (c) est ainsi également enrichi en ozone, ce courant partiel enrichi étant ensuite acheminé du moins partiellement au récipient d'absorption (3) et la solution ozonée aqueuse souhaitée étant prélevée dans ce dernier.

7. Dispositif de mise en oeuvre du procédé selon une ou plusieurs de revendications 1 à 6, comportant un générateur d'ozone (1), au moins un récipient d'absorption (3, 3a, 3b) ayant notamment la forme d'une colonne d'absorption et qui est relié par une conduite (5) au générateur d'ozone (1), et un séchoir (4), des pompes et des conduites reliant les parties de l'installation, caractérisé en ce qu'il est prévu, dans la conduite (5) reliant le générateur d'ozone (1) au récipient d'absorption (3, 3a), au moins un réservoir de détente (2, 2a) qui est alimenté en eau ozonée par une conduite (6, 6a, 5a) émanant du récipient d'absorption (3, 3b, 3a) et est relié par une conduite de recyclage (7, 7a, 28) à la tête du récipient d'absorption (3, 3b, 3a).

8. Dispositif selon la revendication 7, caractérisé en ce que la tête du récipient d'absorption (3, 3b, 10) est reliée au générateur d'ozone (1) par une conduite d'oxygène (8, 8a, 37) et un séchoir (4) en vue du recyclage de l'oxygène.

9. Dispositif selon la revendication 7 destiné à la mise en oeuvre du procédé selon les revendications 4 ou 5, caractérisé en ce qu'une dérivation (5a) partant de la conduite d'ozone (5) aboutit à une colonne d'absorption (3b), laquelle est reliée par la conduite (6a) au réservoir de détente (2) et par la conduite de gaz (21) à la colonne d'absorption (3a) et en ce qu'il est prévu, partant du réservoir de détente (2), une conduite de recyclage (7a) aboutissant à la tête de la colonne d'absorption (3b) de même qu'une conduite d'ozone (5) aboutissant à la colonne d'absorption (3a).

10. Dispositif selon la revendication 7, destiné à la mise en oeuvre du procédé selon la revendication 6, caractérisé en ce que le générateur d'ozone (1) est relié par des conduites (c, 32 ; b, 5 ; a) à trois récipients d'absorption (3, 3a, 10), un réservoir de détente (2, 2a) étant respectivement prévu dans la conduite (b, 5) entre le générateur d'ozone (1) et la colonne d'absorption (3a) et dans la conduite (c, 32) entre le générateur d'ozone (1) et la colonne d'absorption (3).
